# EUROPEAN PATENT APPLICATION

(11) **EP 4 600 280 A1**
(43) Date of publication of application: **13.08.2025**
(21) Application number: 23874711.7
(22) Date of filing: 26.09.2023
(51) Int. Cl.: C08F 230/04, C08F 212/08, C08F 220/18, C08F 290/06, G02B 1/04, G02C 7/10

(54) **CURABLE COMPOSITION, CURED BODY, OPTICAL ARTICLE, LENS AND EYE GLASSES**

(30) Priority: 05.10.2022 JP 2022161021
(71) Applicant: TOKUYAMA CORPORATION, Yamaguchi 745-8648 (JP)
(72) Inventor: MARUMOTO, Hayato, Shunan-shi, Yamaguchi 745-8648 (JP); KAWASAKI, Takayoshi, Shunan-shi, Yamaguchi 745-8648 (JP); NOGUCHI, Takao, Shunan-shi, Yamaguchi 745-8648 (JP); SHIMIZU, Yasutomo, Shunan-shi, Yamaguchi 745-8648 (JP)
(74) Representative: Papula Oy
(86) International application number: PCT/JP2023/034841
(87) International publication number: WO 2024/075583

(57) **Abstract**

The present invention provides a curable composition which contains a first bismuth compound that comprises bismuth and at least one of an acryloyl group and a methacryloyl group, and a first polymerizable compound that comprises at least one polymerizable group selected from the group consisting of an acryloyl group, a methacryloyl group, a vinyl group and an allyl group, while having a boiling point of 90°C or more at 1 atmosphere, wherein the content of a nitrile compound having a nitrile group is less than 10% by mass. The present invention also provides: a cured body of this curable composition; an optical article and a lens, each of which comprises this cured body; and eye glasses which comprise this lens.

## Description

### TECHNICAL FIELD

The present invention relates to a curable composition, a cured product, an optical article, a lens, and eyeglasses.

### BACKGROUND ART

X-rays irradiated directly and stray X-rays irradiated indirectly by reflection or diffusion affect a crystalline lens of an eyeball of a human body, and may induce cataract. In order to solve this problem, an optical article such as a lens capable of shielding these X-rays and transmitting visible light is desired. Lead glass is known as an optical material for forming the optical article. The lead glass has high X-ray shielding performance, but has a high specific gravity. Therefore, X-ray shielding goggles provided with a lens containing lead glass have a large mass and may be difficult to be commonly used. As another optical material, a lead acrylate is also known. The lead acrylate has lower X-ray shielding performance than lead glass, but is lightweight. Therefore, the lead acrylate is used in optical articles for shielding stray X-rays.

However, lead is an environmentally harmful substance, and an optical material not using lead is desired. As an alternative element of lead, for example, many metal elements such as bismuth, barium, antimony, tin, and tungsten are exemplified as candidates. Among these, bismuth is an element that is harmless to the human body such as being used as a gastrointestinal drug for years, has high X-ray shielding performance, and is suitable for lead substitution.

A cured product of a curable composition containing a bismuth compound in which a phosphoric acid ester having a (meth)acryloyl group is bonded to bismuth, and a radically polymerizable monomer has high transparency and lightweight, and is suitable as an optical material (see Patent Documents 1 and 2). In order to enhance the mechanical properties of the cured product, it has been studied to add a nitrile compound to the curable composition.

### Citation List

### Patent Document

Patent Document 1: PCT International Publication No. WO2022/014591
Patent Document 2: PCT International Publication No. WO2019/177084

### DISCLOSURE OF THE INVENTION

### Problems to be Solved by the Invention

An object of the present invention is to provide a curable composition with reduced odor, a cured product with reduced odor, and an optical article, a lens, and eyeglasses containing the cured product.

### Means for Solving the Problems

Specific means for solving the above problems include the following embodiments.
<1> A curable composition containing:
   a first bismuth compound containing bismuth and at least one of an acryloyl group or a methacryloyl group; and
   a first polymerizable compound having at least one polymerizable group selected from the group consisting of an acryloyl group, a methacryloyl group, a vinyl group, and an allyl group, and having a boiling point at 1 atm of 90°C or higher,
   in which a content of a nitrile compound having a nitrile group in the curable composition is less than 10 mass%.
<2> The curable composition as described in <1>, in which a content of the first bismuth compound is 20 mass% or more and 90 mass% or less.
<3> The curable composition as described in <1> or <2>, in which a content of the first polymerizable compound is 10 mass% or more and 80 mass% or less.
<4> The curable composition as described in any one of <1> to <3>, in which the first polymerizable compound contains a monofunctional polymerizable compound having the polymerizable group in a number of one.
<5> The curable composition as described in <4>, in which the monofunctional polymerizable compound has a boiling point of 100°C or higher and 300°C or lower.
<6> The curable composition as described in aspect <4> or aspect <5>, in which the monofunctional polymerizable compound contains a monofunctional (meth)acrylate represented by the following Formula (I): 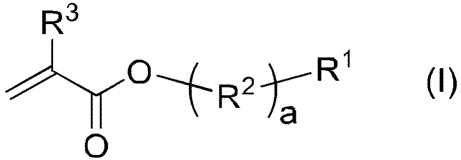 wherein,
   R¹ is a hydroxy group, a linear or branched alkyl group having 1 or more and 10 or less carbon atoms, a linear or branched alkoxy group having 1 or more and 10 or less carbon atoms, a cycloalkyl group having 4 or more and 10 or less carbon atoms, a heterocycloalkyl group having 3 or more and 10 or less carbon atoms and 1 or more and 3 or less hetero atoms, an aryl group having 4 or more and 10 or less carbon atoms, or a heteroaryl group having 3 or more and 10 or less carbon atoms and 1 or more and 3 or less hetero atoms,
   R² is a linear or branched alkylene group having 1 or more and 10 or less carbon atoms or an alkylene oxide group having 1 or more and 10 or less carbon atoms,
   R³ is a hydrogen atom or a methyl group, and
   a is 0 or 1.
<7> The curable composition as described in any one of <4> to <6>, in which the monofunctional polymerizable compound contains at least one (meth)acrylate selected from the group consisting of methoxyethyl acrylate, ethoxyethyl acrylate, methoxyethyl methacrylate, ethoxyethyl methacrylate, tetrahydrofurfuryl acrylate, and tetrahydrofurfuryl methacrylate.
<8> The curable composition as described in any one of <1> to <7>, in which the first polymerizable compound contains a polyfunctional polymerizable compound having the polymerizable group in a number of two or more.
<9> The curable composition as described in <8>, in which the polyfunctional polymerizable compound has a number average molecular weight of 90 or more and 2,000 or less, as determined by gel permeation chromatography analysis.
<10> The curable composition as described in <8> or <9>, in which the polyfunctional polymerizable compound contains a bifunctional (meth)acrylate represented by the following Formula (II): 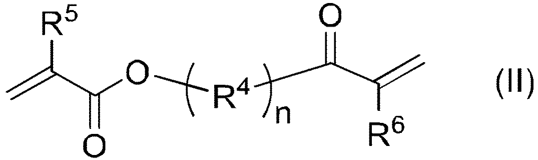 wherein,
   R⁴ is a linear or branched alkylene group having 1 or more and 10 or less carbon atoms or a linear or branched alkylene oxide group having 1 or more and 10 or less carbon atoms,
   R⁵ and R⁶ each independently represent a hydrogen atom or a methyl group, and
   n is a number of 1 or more and 50 or less.
<11> The curable composition as described in any one of <8> to <10>, in which the polyfunctional polymerizable compound contains a bifunctional (meth)acrylate selected from the group consisting of polyethylene glycol dimethacrylate, polyethylene glycol diacrylate, polypropylene glycol dimethacrylate, polypropylene glycol diacrylate, polytetramethylene glycol dimethacrylate, and polytetramethylene glycol diacrylate.
<12> A cured product of the curable composition as described in any one of <1> to <11>.
<13> An optical article containing the cured product as described in aspect <12>.
<14> A lens containing the cured product as described in aspect <12>.
<15> Eyeglasses including the lens as described in <14>.

### Effects of the Invention

According to the present invention, a curable composition with reduced odor, a cured product with reduced odor, and an optical article, a lens, and eyeglasses containing the cured product can be provided.

### PREFERRED MODE FOR CARRYING OUT THE INVENTION

Hereinafter, specific embodiments to which the present invention is applied will be described in detail. In the present specification, the term "(meth)acrylate" means both "acrylate" and "methacrylate", and the term "(meth)acryloyl" means both "acryloyl" and "methacryloyl". The same applies to terms such as "(meth)acrylic resin" and "(meth)acrylic acid".

### <<Curable Composition>>

A curable composition according to the present embodiment contains a first bismuth compound and a first polymerizable compound. The first bismuth compound contains bismuth and at least one of an acryloyl group or a methacryloyl group. The first polymerizable compound has a polymerizable group and has a boiling point at 1 atm of 90°C or higher. The polymerizable group includes at least one selected from the group consisting of an acryloyl group, a methacryloyl group, a vinyl group, and an allyl group. In the curable composition according to the present embodiment, the content of a nitrile compound having a nitrile group is less than 10 mass%.

The first bismuth compound is lightweight and has high transparency, and is suitable as an X-ray shielding optical material. Furthermore, the first bismuth compound has high compatibility with another polymerizable compound such as a (meth)acrylate monomer or high dispersibility in another polymerizable compound. Therefore, the first bismuth compound may be mixed with other polymerizable compounds and used as in the case of a general curable composition such as a (meth)acrylic resin. When a nitrile compound such as acrylonitrile is used as the other polymerizable compound, a cured product having high strength can be obtained.

However, a curable composition containing the first bismuth compound and a cured product thereof may have a unique odor. As a result of intensive studies, the present inventors have found that the cause of the odor is derived from an unpolymerized nitrile compound remaining in the cured product. In addition, the present inventors have found that a polymerizable compound having a relatively low boiling point under a normal pressure is easily volatilized from the cured product and may cause odor. The curable composition according to the present embodiment contains a first polymerizable compound in which an amount of the nitrile compound is limited and which has a relatively high boiling point. Therefore, with the curable composition according to the present embodiment, a cured product with reduced odor can be obtained. When the curable composition with reduced odor is used, discomfort of a manufacturer or processor of the cured product or a user wearing an optical article containing the cured product is reduced, and the production efficiency and the like are further improved.

Hereinafter, each component used in the curable composition according to the present embodiment will be described.

### <First Bismuth Compound>

The first bismuth compound contains bismuth, and thus may be used as a radiation shielding material. The radiation includes electromagnetic radiation and particle radiation. The electromagnetic radiation includes X-rays and γ-rays. The particle radiation includes α-rays, β-rays, neutron rays, and proton rays.

The first bismuth compound has excellent X-ray shielding performance, and thus is particularly suitably used as a shielding material for X-rays and β-rays capable of generating X-rays.

The first bismuth compound has a high solubility in a radically polymerizable compound having at least one radically polymerizable group selected from the group consisting of a nitrile group, an acryloyl group, a methacryloyl group, a vinyl group, and an allyl group. Therefore, when the first bismuth compound is used, a curable composition containing bismuth at a high concentration and a cured product thereof can be obtained. The first bismuth compound is more excellent in solubility in the radically polymerizable compound than bismuth subsalicylate alone.

The first bismuth compound may be in any form as long as it contains bismuth and a (meth)acryloyl group. For example, bismuth and a (meth)acryloyl group may be directly bonded to each other, or may be bonded to each other via a bonding group. Examples of the bonding group include oxygen, sulfur, nitrogen, phosphoric acid, and the like. In the first bismuth compound, bismuth and a first phosphoric acid ester having a (meth)acryloyl group are preferably bonded to each other. Such a first bismuth compound tends to have higher compatibility with various polymerizable compounds. A bonding form between bismuth and the first phosphoric acid ester is not particularly limited, and may be an ionic bond, a coordinate bond, or a covalent bond. That is, the first bismuth compound may be a phosphate or a complex salt having bismuth (Bi³⁺ or Bi⁵⁺) as a cation and the first phosphoric acid ester as an anion, a phosphate compound, or a complex.

The first bismuth compound may be a mono(meth)acrylate having one (meth)acryloyl group, a di(meth)acrylate having two (meth)acryloyl groups, a tri(meth)acrylate having three (meth)acryloyl groups, or a polyfunctional (meth)acrylate having four or more (meth)acryloyl groups.

In the first bismuth compound, the first phosphoric acid ester is represented by, for example, the following Formula (2).

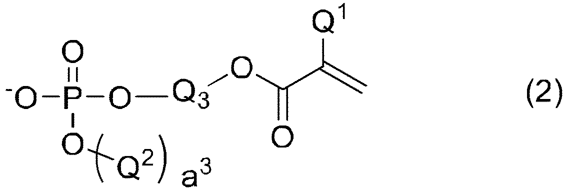

In the above Formula (2), Q¹ is a hydrogen atom or a methyl group. Q¹ is preferably a methyl group.

Q² is a hydrogen atom, a linear or branched alkyl group having 1 or more and 10 or less carbon atoms, an aryl group having 4 or more and 16 or less carbon atoms, or a (meth)acryloyloxyalkylene group. The alkyl group preferably has 1 or more and 6 or less carbon atoms. The aryl group preferably has 5 or more and 8 or less carbon atoms. The aryl group is preferably a phenyl group. The number of carbon atoms of the alkylene group contained in the (meth)acryloyloxyalkylene group is, for example, 1 or more and 10 or less, and preferably 1 or more and 3 or less. The (meth)acryloyloxyalkylene group is preferably a (meth)acryloyloxyethylene group.

a³ is 0 or 1. When a³ is 0, an oxygen atom to which P and Q² are bonded is O⁻.

Q³ is a linear or branched alkylene group having 1 or more and 10 or less carbon atoms or a linear or branched alkylenoxyalkylene group having 1 or more and 10 or less carbon atoms.

In addition to the first phosphoric acid ester, another compound may be further bonded to the first bismuth compound. A bonding form between bismuth and the other compound may be an ionic bond, a coordinate bond, or a covalent bond. That is, the first bismuth compound may be a phosphate or a complex salt having bismuth (Bi³⁺ or Bi⁵⁺) as a cation and the first phosphoric acid ester and the other compound as an anion, a phosphate compound, or a complex.

Specific examples of other compounds include at least one selected from the group consisting of salicylic acid and (meth)acrylic acid.

In order to improve the solubility in the radically polymerizable compound, regarding a proportion of the other compound to the first phosphoric acid ester, the other compound is preferably 0.1 mol to 10 mol, more preferably 0.1 mol to 5 mol, still more preferably 0.1 mol to 1 mol, and particularly preferably 0.1 mol to 0.5 mol with respect to 1 mol of the first phosphoric acid ester. When two or more types of first phosphoric acid esters are present, the above range is based on a total number of moles of the first phosphoric acid esters.

It can be confirmed by infrared spectroscopy (IR) analysis that the first phosphoric acid ester is bonded to bismuth. That is, in the infrared spectroscopy analysis measurement of the first bismuth compound, for example, when a peak is confirmed at 1670 cm⁻¹ to 1700 cm⁻¹, it can be confirmed that the first phosphoric acid ester is bonded to bismuth. This peak is considered to be a characteristic peak as stretching vibration of Bi-O-P. This peak is not confirmed for bismuth and the first phosphoric acid ester before bonding.

The IR spectrum is measured, for example, by one reflection ATR method by using Spectrum One manufactured by Perkin Elmer, Inc., with four times accumulation.

In addition, the number of bonds of salicylic acid or (meth)acrylic acid in the first bismuth compound and each phosphoric acid ester can be confirmed by combining nuclear magnetic resonance spectroscopy (NMR), matrix-assisted laser desorption ionization time-of-flight mass spectrometry (MALDI-TOF-MS), X-ray photoelectron spectroscopy (XPS), and elemental analysis by energy dispersive X-ray spectroscopy (EDS).

¹H- and ³¹P-NMR measurement is performed using a nuclear magnetic resonance apparatus (JNM-ECA400II manufactured by JEOL Ltd.), using deuteroacetone as a solvent at a sample concentration of 1 mass%.

XPS measurement is performed using an X-ray photoelectron spectrometer (ESCA5701ci/MC manufactured by ULVAC-PHI, Inc.), using monochromatized Al-Kα (14 kV-330 W) as an X-ray source at an aperture diameter of φ 800 µm and a photoelectron extraction angle of 45 degrees. A sample is ground in an agate mortar, and the obtained powder is fixed to a substrate with a carbon tape and introduced into a measurement chamber for measurement.

The first bismuth compound is, for example, a phosphate or a complex salt represented by the following Formula (1).

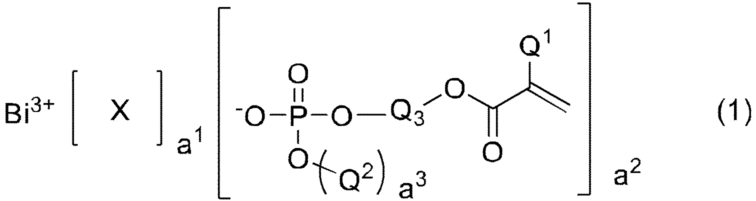

In the above Formula (1), Q¹, Q², Q³, and a³ are the same as in the above Formula (2).

In the above Formula (1), X is (meth)acrylic acid represented by the following Formula (1a) or salicylic acid represented by the following Formula (1b). X is preferably salicylic acid represented by the following Formula (1b).

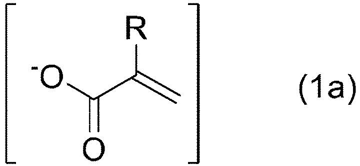

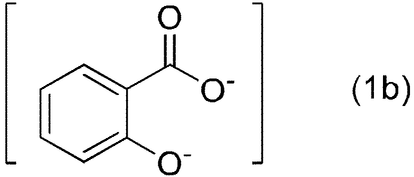

a¹ is a number of 0 or more and 1 or less. a² is a number of 0.1 or more and 3 or less. a¹+a² is a number of 2 or more and 3 or less.

A fact that the first bismuth compound has the structure represented by the above Formula (1) can be confirmed by, for example, detection of a proton adduct molecular ion or a sodium adduct ion of the compound in MALDI-TOF-MS measurement. For example, when a compound in which a¹ is a number of 1 to 2, X is salicylic acid, a² is a number of 1 to 3, Q¹ is a methyl group, Q² is a methacryloyloxyalkyl group, and Q³ is a linear alkyl group having 2 carbon atoms is measured, a proton adduct ion in which m/z = 667 is detected.

The MALDI-TOF-MS measurement is performed using rapiflex TOF/TOF type manufactured by Bruker, α-cyano-4-hydroxycinnamic acid (CHCA), dithranol (DIT), and 2,5-dihydroxybenzoic acid (DHB) as a matrix, and sodium trifluoroacetate as a cationizing agent. Measurement is performed in a reflector/positive mode, and a mass range is m/z = 20 to 4,000.

The first bismuth compound may be a mixture in which a plurality of types of first phosphoric acid esters and a plurality of types of other compounds are bonded to bismuth. In the first bismuth compound, both the first phosphoric acid ester having one (meth)acryloyl group and the first phosphoric acid ester having two (meth)acryloyl groups are preferably bonded to bismuth. Such a first bismuth compound tends to have high compatibility with a polymerizable compound.

In such a first bismuth compound, a proportion of the first phosphoric acid ester having two (meth)acryloyl groups is preferably 0.05 mol to 3 mol, more preferably 0.10 mol to 2 mol, and still more preferably 0.15 mol to 1 mol with respect to 1 mol of the first phosphoric acid ester having one (meth)acryloyl group.

Preferred examples of the first bismuth compound include compounds represented by the following Formulae (III) to (V).

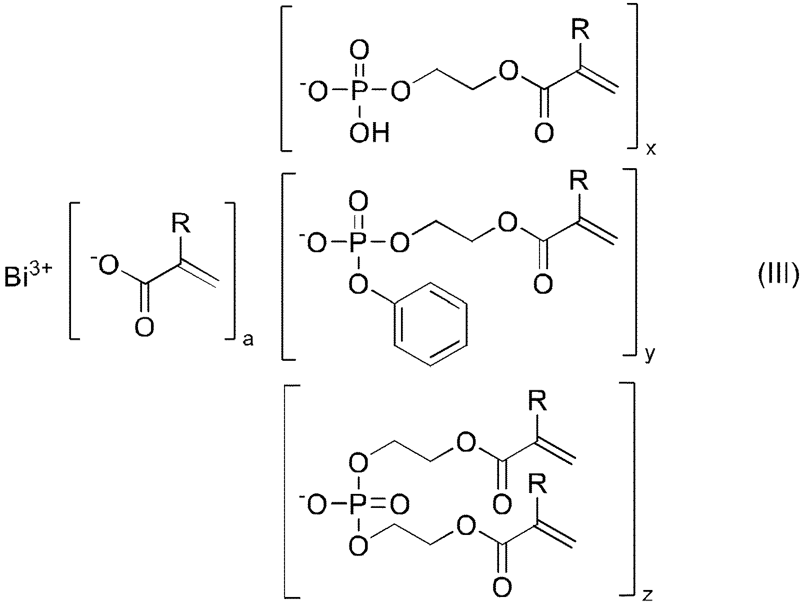

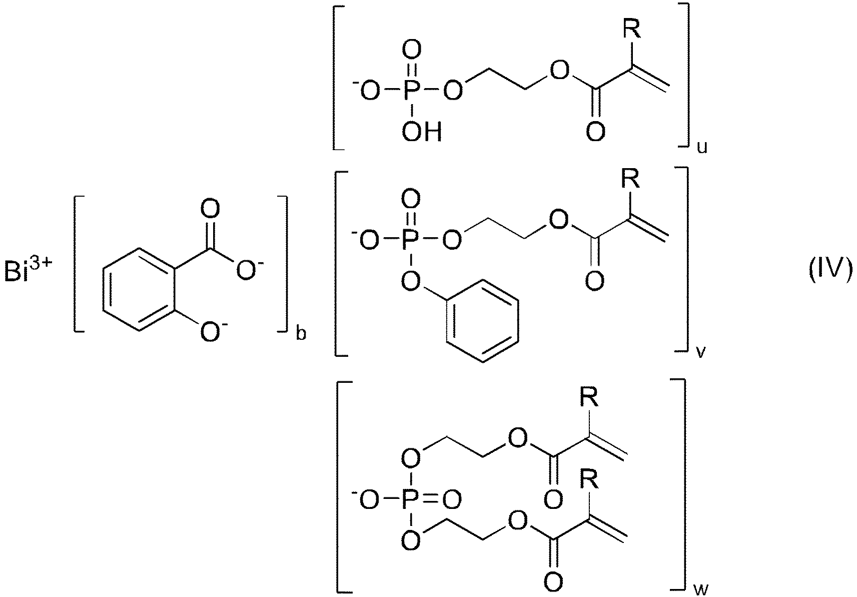

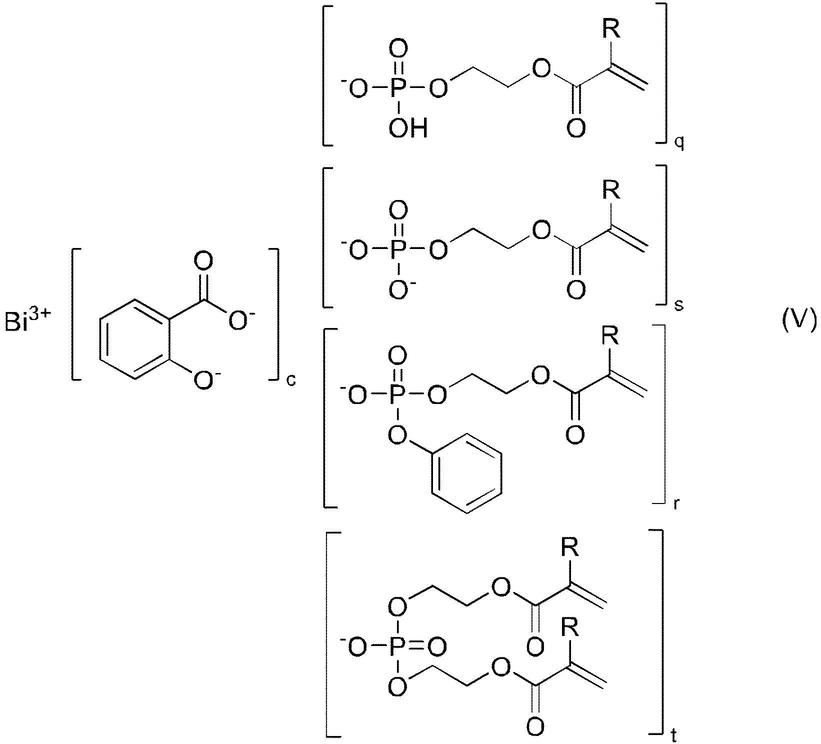

Here, R each independently represents a hydrogen atom or a methyl group.

In the above Formula (III), a + x + y + z = 3. x represents the number of moles of a 2-((meth)acryloyloxy)ethyl hydrogen phosphate residue. y represents the number of moles of a 2-((meth)acryloyloxy)ethyl phenyl phosphate residue. z represents the number of moles of a bis[2-((meth)acryloyloxy)ethyl] phosphate residue. a represents the number of moles of a (meth)acrylic acid residue.

In the above Formula (IV), 2b + u + v + w = 3. u represents the number of moles of a 2-((meth)acryloyloxy)ethyl hydrogen phosphate residue. v represents the number of moles of a 2-((meth)acryloyloxy)ethyl phenyl phosphate residue. w represents the number of moles of a bis[2-((meth)acryloyloxy)ethyl] phosphate residue. b represents the number of moles of a salicylic acid residue.

In the above Formula (V), 2c + q + r + 2s + t = 3. q represents the number of moles of a 2-((meth)acryloyloxy)ethyl hydrogen phosphate residue. r represents the number of moles of a 2-((meth)acryloyloxy)ethyl phenyl phosphate residue. s represents the number of moles of a 2-((meth)acryloyloxy)ethyl phosphate residue. t represents the number of moles of a bis[2-((meth)acryloyloxy)ethyl] phosphate residue. c represents the number of moles of a salicylic acid residue.

Each of the first bismuth compounds represented by the above Formulae (III) to (V) may be a mixture of a plurality of compounds instead of a single compound. In this case, the number of moles of each residue described above indicates the number of moles of the entire mixture.

In the above Formula (III), considering the first bismuth compound which can be produced at a low temperature and is less colored, in a case of a = 0, x:y:z = 1:0.05 to 3:0.5 to 30 is preferable, x:y:z = 1:0.1 to 2:1 to 20 is more preferable, and x:y:z = 1:0.15 to 1:1.5 to 10 is still more preferable. From the viewpoint of further reducing coloration, a = 0 and y = 0 can also be set.

In the above Formula (III), in a case other than a = 0, a: (x+y+z) = 0.1 to 10:1 is preferable, a: (x+y+z) = 0.1 to 5:1 is more preferable, and a: (x+y+z) = 0.1 to 1:1 is still more preferable. At this time, it is preferable that x:y:z = 1:0.05 to 3:0.5 to 30, it is more preferable that x:y:z = 1:0.1 to 2:1 to 20, and it is still more preferable that x:y:z = 1:0.15 to 1:1.5 to 10.

In the above Formula (IV), in a case of b = 0, the same is applied as when x is replaced by u, y is replaced by v, and z is replaced by w in the above definition.

In the above Formula (IV), in a case other than b = 0, it is preferable that b: (u+v+w) = 1:0.1 to 30, it is more preferable that b: (u+v+w) = 1:0.2 to 20, it is still more preferable that b: (u+v+w) = 1:0.3 to 10, and it is particularly preferable that b: (u+v+w) = 1:0.5 to 5. At this time, it is preferable that u:v:w = 1:0.05 to 20:0.1 to 40, it is more preferable that u:v:w = 1:0.1 to 10:0.2 to 20, and it is still more preferable that u:v:w = 1:0.2 to 5:0.4 to 10.

In the above Formula (IV), in a case of c = 0, it is preferable that q:r:s:t = 1:0.1 to 50:0.05 to 20:0.1 to 40, it is more preferable that q:r:s:t = 1:0.3 to 30:0.1 to 10:0.2 to 20, and it is still more preferable that q:r:s:t = 1:0.5 to 20:0.2 to 5:0.4 to 10.

In the above Formula (V), in a case other than c = 0, it is preferable that c: (q+r+s+t) = 1:0.1 to 30, it is more preferable that c: (q+r+s+t) = 1:0.2 to 20, it is still more preferable that c: (q+r+s+t) = 1:0.3 to 10, and it is particularly preferable that c: (q+r+s+t) = 1:0.5 to 5. At this time, it is preferable that q:r:s:t = 1:0.1 to 50:0.05 to 20:0.1 to 40, it is more preferable that q:r:s:t = 1:0.3 to 30:0.1 to 10:0.2 to 20, and it is still more preferable that q:r:s:t = 1:0.5 to 20:0.2 to 5:0.4 to 10.

The first bismuth compound is, for example, a phosphate or a complex salt represented by the following Formula (3).

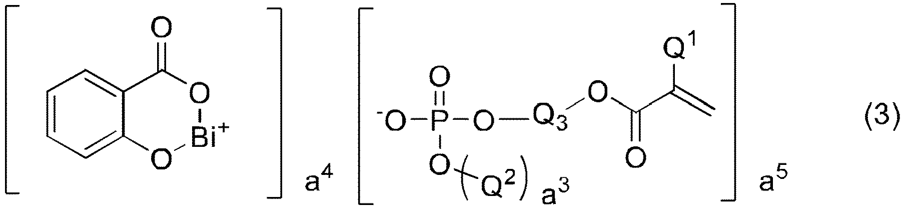

In the above Formula (3), Q¹, Q², Q³, and a³ are the same as those in the above Formula (2).

a⁴ is a number more than 0 and 3 or less. a⁵ is a number more than 0 and 3 or less. a⁴+a⁵ is 3.

The first bismuth compound may be a composition containing a compound other than the first bismuth compound. Hereinafter, this composition is also referred to as a first bismuth composition. The first bismuth composition may contain a phosphate compound that is a by-product during production, or an unreacted raw material.

Removal of the by-product phosphate compound or the unreacted raw material from the first bismuth compound requires a large amount of industrial labor. In addition, the by-product phosphate compound or the unreacted raw material may contribute to improvement in solubility in the radically polymerizable monomer.

Examples of the by-product phosphate compound include dimers of phosphoric acid esters having one (meth)acryloyl group (phosphoric acid monoesters), dimers of phosphoric acid esters having two (meth)acryloyl groups (phosphoric acid diesters), esters of bismuth salicylate or bismuth (meth)acrylate and phosphoric acid, and the like.

Examples of the unreacted raw material include phosphoric acid esters having one (meth)acryloyl group (phosphoric acid monoesters), phosphoric acid esters having two (meth)acryloyl groups (phosphoric acid diesters), bismuth salicylate, bismuth (meth)acrylate, and the like.

In the first bismuth composition, a proportion of compounds other than the first bismuth compound is, for example, 30 mass% or less. The proportion has no lower limit value, but is 0 mass% according to one example, and is 5 mass% according to another example. The proportion can be confirmed by quantifying the by-product phosphate compound and the unreacted raw material in the first bismuth composition according to the internal standard method using ¹H NMR.

The first bismuth composition may contain a compound derived from bismuth oxide. The compound derived from bismuth oxide is, for example, a compound in which bismuth oxide is bonded to a phosphoric acid ester having a (meth)acryloyl group, (meth)acrylic acid, and/or salicylic acid. Although a structure of the compound derived from bismuth oxide is unclear, it is considered that a hydroxy group formed on a surface of bismuth oxide is bonded to a carboxy group of the phosphoric acid ester, (meth)acrylic acid, or salicylic acid. The compound derived from bismuth oxide is very difficult to separate from the first bismuth compound. Therefore, when the compound derived from bismuth oxide is produced as a by-product, it is preferable to use the first bismuth compound in a state of containing the compound derived from bismuth oxide. When a compound derived from bismuth oxide is produced as a by-product, it is desirable to adjust production conditions and the like so that the amount of the compound falls within a range in which the solubility of the first bismuth composition is not reduced. Inclusion of the compound derived from bismuth oxide can be comprehensively determined by the production conditions or methods such as IR, NMR, and XPS.

### [Production Method of First Bismuth Compound]

A method for producing the first bismuth compound is not particularly limited, but the first bismuth compound is preferably produced by reacting a second bismuth compound with a first phosphoric acid ester. Specifically, it is preferable that a polymerization inhibitor is added to an aliphatic hydrocarbon solvent or an aromatic solvent as necessary to react the second bismuth compound with the first phosphoric acid ester for dehydration.

The second bismuth compound means an organic compound containing bismuth. The second bismuth compound contains a bismuth (meth)acrylate or a bismuth subsalicylate. The bismuth (meth)acrylate or bismuth subsalicylate is not particularly limited, and a commercially available product can be used.

The bismuth subsalicylate is a compound in which salicylic acid is bonded to bismuth, and is represented by the following Formula (VI).

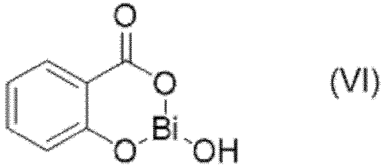

A method for producing bismuth subsalicylate is not particularly limited, and the bismuth subsalicylate can be produced by a known method.

As the first phosphoric acid ester, a commercially available product can be used. The first phosphoric acid ester may be a phosphoric acid ester having one (meth)acryloyl group, a phosphoric acid ester having two (meth)acryloyl groups, or a mixture thereof.

Examples of the phosphoric acid ester having one (meth)acryloyl group include 2-(methacryloyloxy)ethyl dihydrogen phosphate, diphenyl-2-methacryloyloxyethyl phosphate, and the like.

Examples of the phosphoric acid ester having two (meth)acryloyl groups include bis[2-(methacryloyloxy)ethyl] hydrogen phosphate, [2-(methacryloyloxy)ethyl] phenyl hydrogen phosphate, and the like.

In order to improve the compatibility, it is preferable to add, as the first phosphoric acid ester, diphenyl-2-methacryloyloxyethyl phosphate, bis[2-(methacryloyloxyethyl)] phenyl phosphate, or a phosphate triester such as tris[2-(methacryloyloxyethyl)] phosphate. When a phosphate triester having a phenyl group is used, a monovalent phenyl phosphoric acid diester having one (meth)acryloyl group represented by the above Formulae (III) to (V) can be favorably introduced.

An amount of the phosphate triester used is preferably 0.1 mol to 20 mol, and more preferably 0.2 mol to 5 mol, per 1 mol of the total of the phosphoric acid ester having one (meth)acryloyl group and the phosphoric acid ester having two (meth)acryloyl groups.

An amount of the first phosphoric acid ester used may be determined so as to obtain a desired first bismuth compound. Specifically, the amount of the first phosphoric acid ester used is preferably in a range of 0.3 mol to 10 mol with respect to 1 mol of the second bismuth compound.

### (Aliphatic Hydrocarbon Solvent or Aromatic Solvent)

In the present embodiment, it is preferable that the second bismuth compound and the first phosphoric acid ester are stirred and mixed in an aliphatic hydrocarbon solvent or an aromatic solvent to be reacted. At this time, since water is generated in the reaction system, the generated water is preferably dehydrated. In order to facilitate dehydration of the generated water, it is preferable to use an aliphatic hydrocarbon solvent or an aromatic solvent having a high boiling point, specifically, a boiling point of 100°C or higher. The aliphatic hydrocarbon solvent and the aromatic solvent may be mixed to be used as a mixed solvent.

Examples of the aliphatic hydrocarbon solvent or the aromatic solvent include hexane, heptane, nonane, decane, undecane, dodecane, xylene, dimethoxybenzene, and isomers thereof; benzene, toluene, chlorobenzene, bromobenzene, anisole; petroleum ether, petroleum benzine, and benzoin.

An amount of the aliphatic hydrocarbon solvent or the aromatic solvent used is not particularly limited as long as the amount allows the second bismuth compound and the first phosphoric acid ester to be sufficiently mixed. In consideration of the productivity of the first bismuth compound, the aliphatic hydrocarbon solvent or the aromatic solvent is preferably used at a proportion of 5 mL to 100 mL per 1 g of the second bismuth compound.

### (Reaction Conditions)

A method for introducing the second bismuth compound and the first phosphoric acid ester into the reaction system is not particularly limited. For example, it is possible to adopt a method in which the second bismuth compound diluted with an aliphatic hydrocarbon solvent or an aromatic solvent as necessary and the first phosphoric acid ester diluted with an aliphatic hydrocarbon solvent or an aromatic solvent as necessary are added together into the reaction system, followed by stirring and mixing. It is also possible to adopt a method in which an aliphatic hydrocarbon solvent or an aromatic solvent is introduced into the reaction system in advance, and the second bismuth compound diluted with the aliphatic hydrocarbon solvent or the aromatic solvent as necessary and the first phosphoric acid ester diluted with the aliphatic hydrocarbon solvent or the aromatic solvent as necessary are added thereto together, followed by stirring and mixing. It is also possible to adopt a method in which one component is introduced into the reaction system in advance, and then the other component is introduced into the reaction system, followed by stirring and mixing. Among them, in order to reduce coloration of the obtained first bismuth compound and improve productivity, the following method is preferably adopted. First, the second bismuth compound is dispersed in the aliphatic hydrocarbon solvent or the aromatic solvent. At this time, the second bismuth compound may not be dissolved, but in this case, it is preferable to crush clumps or the like of the second bismuth compound by an ultrasonic device or the like so that the clumps or the like are not present. Thereafter, the first phosphoric acid ester is added to a cloudy solution in which the second bismuth compound is dispersed, followed by starting stirring and heating.

A temperature (reaction temperature) at the time of stirring each component may be a reflux temperature of the aliphatic hydrocarbon solvent or the aromatic solvent, but in order to further reduce the coloration of the obtained first bismuth compound, the stirring is preferably performed at an oil bath temperature of 30°C to 150°C, more preferably 40°C to 140°C, and still more preferably 45°C to 120°C.

When the reaction temperature is 30°C to 110°C, it is preferable to reduce the pressure in the reaction system in order to remove (dehydrate) water generated in the reaction system. At this time, the second bismuth compound and the first phosphoric acid ester may be dehydrated while being mixed, or may be dehydrated after being mixed. However, considering the efficiency of the reaction, it is preferable to mix the second bismuth compound and the first phosphoric acid ester, followed by dehydrating while being reacted.

A reaction time is not particularly limited, and may be generally 1 hour or longer and 6 hours or shorter.

An atmosphere during the reaction may be an air atmosphere, an inert gas atmosphere, or a dry air atmosphere in consideration of operability, and is preferably an air atmosphere in consideration of operability.

After the reaction under the above conditions, the obtained first bismuth compound is concentrated by distilling off the solvent, and when an insoluble cloud component is present, the component is preferably separated by filtration or centrifugation. Further, a solvent which is soluble in the used reaction solvent and does not dissolve the first bismuth compound is added to the concentrated reaction solution obtained by this treatment, followed by precipitating and purifying. When the high-boiling-point solvent remains, the above decantation operation is repeated to replace the solvent. Thereafter, the remaining solvent is distilled off, followed by vacuum drying to remove the first bismuth compound.

In the curable composition according to the present embodiment, the content of the first bismuth compound is, for example, 20 mass% or more and 90 mass% or less. When the content of the first bismuth compound is large, the X-ray shielding effect of the cured product tends to be increased. The content of the first bismuth compound is preferably 50 mass% or more, more preferably 60 mass% or more, and still more preferably 65 mass% or more. On the other hand, when the content of the first bismuth compound is excessively large, the odor of the cured product may be strengthened. The content of the first bismuth compound is preferably 80 mass% or less.

### <First Polymerizable Compound>

The first polymerizable compound has at least one polymerizable group selected from the group consisting of an acryloyl group, a methacryloyl group, a vinyl group, and an allyl group, and has a boiling point at 1 atm of 90°C or higher.

The boiling point of the first polymerizable compound is preferably 100°C or higher, and more preferably 140°C or higher. When the boiling point of the first polymerizable compound is high, the odor degree of the cured product tends to be decreased. The boiling point of the first polymerizable compound has no particular upper limit, but is 200°C or lower according to one example, and is 300°C or lower according to another example. The boiling point of the first polymerizable compound can be measured by, for example, thermogravimetric (TG) analysis.

In the TG measurement, scanning is performed under an air flow at a heating rate of 10°C/min from the room temperature to 500°C using simultaneous thermogravimetry/differential thermal analysis (TG8120 manufactured by Rigaku Corporation).

The content of the first polymerizable compound in the curable composition is, for example, 10 mass% or more and 80 mass% or less. The content can be measured by, for example, ¹H MNR. NMR measurement conditions are the same as those described above.

The first polymerizable compound preferably contains a monofunctional radically polymerizable compound having one radically polymerizable moiety in one molecule. When the curable composition contains a monofunctional radically polymerizable compound, the compatibility with the first bismuth compound tends to be increased. A boiling point of the monofunctional radically polymerizable compound is preferably 150°C or higher, and more preferably 180°C or higher.

Examples of the monofunctional radically polymerizable compound having an acryloyl group include various commercially available polymerizable compounds such as acrylic acid, acrylic amide, phenyl acrylate, benzyl acrylate, isobutyl acrylate, methoxyethyl acrylate, ethoxyethyl acrylate, tetrahydrofurfuryl acrylate, isocyanatoethyl acrylate, and acryloxymethyltrimethoxysilane.

Examples of the monofunctional radically polymerizable compound having a methacryloyl group include various commercially available polymerizable compounds such as methacrylic acid, methacrylic amide, phenyl methacrylate, benzyl methacrylate, isobutyl methacrylate, methoxyethyl methacrylate, ethoxyethyl methacrylate, and methacryloxymethyltrimethoxysilane.

Examples of the monofunctional radically polymerizable compound having a vinyl group include various commercially available polymerizable compounds such as vinyl pyridine, vinyl pyrolidone, styrene, and styrene derivatives. Examples of the styrene derivative include methyl styrene and structural isomers thereof, methoxy styrene and structural isomers thereof, methyl styrene dimer, chlorostyrene, bromo styrene, divinylbenzene, and the like.

Examples of the monofunctional radically polymerizable compound having an allyl group include various commercially available polymerizable compounds such as allyl methyl carbonate, allyl phenyl ether, 4-allyloxytoluene, allyloxytrimethylsilane, allyl benzoate, allyl methacrylate, allyl glycidyl ether, and the like.

Examples of suitable monofunctional radically polymerizable compounds include (meth)acrylates represented by the following Formula (I) from the viewpoint of optical properties and impact resistance after curing.

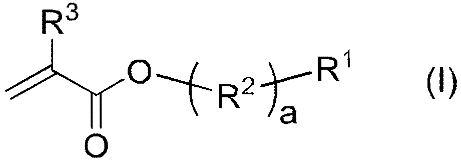

In the above Formula (I), R¹ is a hydroxy group, a linear or branched alkyl group having 1 or more and 10 or less carbon atoms, a linear or branched alkoxy group having 1 or more and 10 or less carbon atoms, a cycloalkyl group having 4 or more and 10 or less carbon atoms, a heterocycloalkyl group having 3 or more and 10 or less carbon atoms and 1 or more and 3 or less hetero atoms, an aryl group having 4 or more and 10 or less carbon atoms, or a heteroaryl group having 3 or more and 10 or less carbon atoms and 1 or more and 3 or less hetero atoms.

R¹ is preferably a linear or branched alkyl group having 1 or more and 10 or less carbon atoms, a linear or branched alkoxy group having 1 or more and 10 or less carbon atoms, or a heterocycloalkyl group having 3 or more and 10 or less carbon atoms and 1 or more and 3 or less hetero atoms, more preferably a linear or branched alkoxy group having 1 or more and 10 or less carbon atoms, or a heterocycloalkyl group having 3 or more and 10 or less carbon atoms and 1 or more and 3 or less hetero atoms, and still more preferably a methoxy group or a tetrahydrofuryl group.

R² is a linear or branched alkylene group having 1 or more and 10 or less carbon atoms or an alkylene oxide group having 1 or more and 10 or less carbon atoms.

R² is preferably a linear or branched alkylene group having 1 or more and 10 or less carbon atoms, and more preferably a methylene group or an ethylene group.

R³ is a hydrogen atom or a methyl group.

a is 0 or 1. a is preferably 1.

Specific examples of the (meth)acrylate represented by the above Formula (I) include at least one selected from the group consisting of methoxyethyl acrylate (MEMA), ethoxyethyl acrylate, methoxyethyl methacrylate, ethoxyethyl methacrylate, tetrahydrofurfuryl acrylate (THFAA), and tetrahydrofurfuryl methacrylate (THFMA).

In the curable composition according to the present embodiment, a proportion of the monofunctional radically polymerizable compound is preferably 10 mass% or more and 80 mass% or less. When the proportion is high, the compatibility with the first bismuth compound tends to be increased. When the proportion is low, the odor degree of the cured product tends to be decreased and the impact resistance tends to be increased. The proportion is more preferably 10 mass% or more and 30 mass% or less. The proportion can be measured by, for example, NMR.

The curable composition according to the present embodiment preferably contains a plurality of types of monofunctional radical polymers. When a plurality of types of monofunctional radical polymers are contained, the compatibility with the first bismuth compound tends to be increased. The curable composition according to the present embodiment may contain a monofunctional radically polymerizable compound having a (meth)acryloyl group and a monofunctional radically polymerizable compound having a vinyl group. A ratio M4/M5 of a mass M4 of the monofunctional radically polymerizable compound having a (meth)acryloyl group to a mass M5 of the monofunctional radically polymerizable compound having a vinyl group is, for example, 0.1 or more and 10 or less, and preferably 1 or more and 5 or less.

The curable composition according to the present embodiment preferably contains two or more types of (meth)acrylates represented by the above Formula (I), and more preferably contains at least one of (meth)acrylates in which R¹ in the above Formula (I) is a furyl group or (meth)acrylates in which R¹ in the above Formula (I) is a methoxy group. When a (meth)acrylate in which R¹ is a furyl group is contained, the compatibility with the first bismuth compound tends to be increased. When a (meth)acrylate in which R¹ is a methoxy group is contained, the hardness of the cured product tends to be increased. In particular, it is more preferable to contain a (meth)acrylate in which R¹ is a methoxy group. A ratio M6/M7 of a mass M6 of the (meth)acrylate in which R¹ is a methoxy group to a mass M7 of the (meth)acrylate in which R¹ is a furyl group is preferably 0.1 or more and 10 or less. When the ratio M6/M7 is within this range, the compatibility with the first bismuth compound in the curable composition is increased, and the hardness of the cured product is increased. The ratio M6/M7 is more preferably 0.3 or more and 5 or less, and still more preferably 0.5 or more and 3 or less.

A ratio M1/M2 of a mass M1 of the first bismuth compound to a mass M2 of the monofunctional radically polymerizable compound is preferably 0.25 or more and 100 or less. When the ratio is high, the X-ray shielding performance of the cured product tends to be enhanced. When the ratio is low, the compatibility with the first bismuth compound tends to be increased. The ratio is more preferably 1 or more and 6 or less.

The first polymerizable compound further preferably contains a polyfunctional radically polymerizable compound having a plurality of radically polymerizable moieties in one molecule. When a polyfunctional radically polymerizable compound is contained, mechanical properties, for example, the impact resistance, of the cured product of the curable composition may be further improved. As the polyfunctional radically polymerizable compound, a commercially available product can be used without limitation. A boiling point of the polyfunctional radically polymerizable compound is preferably 100°C or higher, and more preferably 140°C or higher. A number average molecular weight of the polyfunctional radically polymerizable compound, as determined by gel permeation chromatography analysis, is preferably 90 or more and 2,000 or less, and more preferably 250 or more and 1,800 or less.

As the polyfunctional radically polymerizable compound, a di(meth)acrylate represented by the following Formula (II) is suitably used in consideration of solubility, viscosity as a composition, and impact resistance of a cured product.

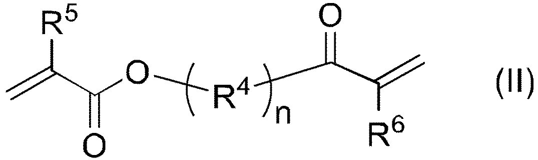

In the above Formula (II), R⁴ is a linear or branched alkylene group having 1 or more and 10 or less carbon atoms or a linear or branched alkylene oxide group having 1 or more and 10 or less carbon atoms.

R⁴ is preferably a linear or branched alkylene oxide group having 1 or more and 10 or less carbon atoms, and more preferably an ethylene oxide group.

R⁵ and R⁶ each independently represent a hydrogen atom or a methyl group.

n is a number of 1 or more and 50 or less. n is preferably a number of 3 or more and 30 or less.

Specific examples of the di(meth)acrylate represented by the above Formula (II) include bifunctional (meth)acrylates selected from the group consisting of polyethylene glycol dimethacrylate, polyethylene glycol diacrylate, polypropylene glycol dimethacrylate, polypropylene glycol diacrylate, polytetramethylene glycol dimethacrylate, and polytetramethylene glycol diacrylate.

In the curable composition according to the present embodiment, a proportion of the polyfunctional radically polymerizable compound is preferably 1 mass% or more and 50 mass% or less. When the ratio is high, the impact resistance of the cured product tends to be increased. When the ratio is low, the compatibility with the first bismuth compound tends to be increased. The ratio is more preferably 5 mass% or more and 20 mass% or less. The proportion can be measured by, for example, NMR. NMR measurement conditions are the same as those described above.

A ratio M1/M3 of the mass M1 of the first bismuth compound to a mass M3 of the polyfunctional radically polymerizable compound is preferably 0.1 or more and 100 or less. When the ratio is high, the X-ray shielding performance of the cured product tends to be enhanced. When the ratio is low, the impact resistance of the cured product tends to be increased. The ratio is more preferably 1 or more and 10 or less.

The curable composition according to the present embodiment preferably contains both a monofunctional radically polymerizable compound and a polyfunctional radically polymerizable compound. A ratio M2/M3 of the mass M2 of the monofunctional radically polymerizable compound to the mass M3 of the polyfunctional radically polymerizable compound is preferably 0.1 or more and 300 or less. When the ratio is high, the compatibility with the first bismuth compound tends to be increased. When the ratio is low, the impact resistance of the cured product tends to be increased. The ratio is more preferably 0.1 or more and 10 or less.

The curable composition according to the present embodiment preferably contains a (meth)acrylate in which R¹ in the above Formula (I) is a furyl group, a (meth)acrylate in which R¹ in the above Formula (I) is a methoxy group, and a di(meth)acrylate represented by the above Formula (II). By containing these three types of polymerizable compounds, a cured product with reduced odor and more excellent impact resistance is obtained. A ratio M8/M9 of a total mass M8 of a mass M6 of the (meth)acrylate in which R¹ is a methoxy group and a mass M7 of the (meth)acrylate in which R¹ is a furyl group to a mass M9 of the di(meth)acrylate represented by the above Formula (II) is preferably 0.1 or more and 10 or less, more preferably 0.3 or more and 5 or less, and still more preferably 0.5 or more and 3 or less.

The curable composition according to the present embodiment may contain 10 mass% or less of a nitrile compound. A content of the nitrile compound in the curable composition is preferably 5 mass% or less, more preferably 3 mass% or less, and still more preferably 1 mass% or less. When the content of the nitrile compound is small, the odor degree of the cured product tends to be decreased. A lower limit value of the content of the nitrile compound is 100 ppm by mass or more according to one example, and is 0 mass% according to another example. The proportion can be measured by, for example, ¹H MNR. NMR measurement conditions are the same as those described above.

Examples of the nitrile compound include acrylonitrile, methacrylonitrile, chloronitrile, 2-chloroacrylonitrile, 2-cyanoethyl acrylate, allylcyanide, allyl cyanoacetate, fumanonitrile, 5-norbornene-2-carbonitrile, and the like.

The curable composition according to the present embodiment may contain a second polymerizable compound having a boiling point at 1 atm of lower than 90°C. A content of the second polymerizable compound in the curable composition is preferably 20 mass% or less, more preferably 10 mass% or less, and still more preferably 5 mass% or less. When the content of the second polymerizable compound is small, the odor degree of the cured product tends to be decreased. A lower limit value of the content of the second polymerizable compound is 1 mass% or more according to an example, and is 0 mass% according to another example. The proportion can be measured by, for example, ¹H MNR.

Examples of the second polymerizable compound include methyl acrylate, allyl methyl ether, allyl ethyl ether, and the like.

A compounding proportion of a total amount of polymerizable compounds other than the first bismuth compound (hereinafter, also referred to as total amount of polymerizable compounds) to the first bismuth compound in the curable composition according to the present embodiment is such that the total amount of the polymerizable compounds is preferably 1 part by mass to 500 parts by mass, more preferably 5 parts by mass to 300 parts by mass, and still more preferably 10 parts by mass to 200 parts by mass, per 100 parts by mass of the first bismuth compound, in consideration of the X-ray shielding effect, dispersibility, coloring reduction effect, and the like.

### <Other Compounding Agents>

The curable composition according to the present embodiment may contain, in addition to the first bismuth compound and the first polymerizable compound, a known compounding agent generally compounded in a radically polymerizable curable composition. Examples of the compounding agent include a radical polymerization initiator, an antioxidant, a release agent for increasing releasability from a mold, a dye for adjusting a color tone of the cured product, a chain transfer agent for controlling polymerizability, and the like.

A content of each compounding agent may be within a range not impairing the effects of the present invention. Specifically, each compounding agent is preferably compounded in an amount of 0 parts by mass to 30 parts by mass, more preferably compounded in an amount of 0.01 parts by mass to 20 parts by mass, and still more preferably compounded in an amount of 0.02 parts by mass to 15 parts by mass, per 100 parts by mass of the total of the first bismuth compound and the first polymerizable compound.

The curable composition according to the present embodiment can be produced by mixing the first bismuth compound, the first polymerizable compound, and various compounding agents compounded as necessary.

### <<Cured Product>>

The cured product according to the present embodiment is obtained by curing the curable composition according to the present embodiment. As a method for producing the cured product, a known method can be adopted. Specifically, photopolymerization, thermal polymerization, or both of photopolymerization and thermal polymerization can be adopted. A suitable polymerization method is determined based on the radical polymerization initiator compounded as necessary.

### <Physical Properties of Cured Product>

The cured product according to the present embodiment contains bismuth having a high X-ray shielding ability at a high concentration, has high transparency, and is less colored. The cured product has, for example, a thickness of 2 mm, a transmittance at a wavelength of 560 nm of 80% or more, an X-ray shielding ability equivalent to 0.02 mm of lead foil or more, and a yellowness of 40 or less.

A proportion of bismuth contained in the cured product can be 5 mass% to 40 mass% when a total mass of the cured product is defined as 100 mass%.

The IR spectrum of the cured product may have a peak at 1,670 cm⁻¹ to 1,700 cm⁻¹. The peak may be derived from a Bi-O-P bond.

### <Application of Cured Product>

The cured product according to the present embodiment can be used as an optical article because the cured product is light-colored transparent. Further, the cured product has a radiation shielding ability even though it is visible light transmissive, and thus can be used as a transparent radiation shielding material.

An optical article obtained by using the cured product according to the present embodiment can be used as a radiation shielding window material or a radiation shielding lens.

A lens obtained by using the cured product according to the present embodiment can be used as radiation shielding eyeglasses or radiation shielding goggles.

### EXAMPLES

Hereinafter, the present invention will be described in more detail with reference to examples and comparative examples, but the present invention is not limited to the following examples.

### <Production Example 1: Production of First Bismuth Compound>

A 1,000 mL eggplant type flask was charged with 94.27 g of bismuth (III) subsalicylate (260.35 mmol in terms of bismuth, manufactured by Sigma-Aldrich), 33.06 g of a mixture (162.04 mmol in terms of phosphate value, MR-200, manufactured by Daihachi Chemical Industry Co., Ltd.) of bis[(2-methacryloyloxyethyl)]phosphate, which is a phosphoric acid diester, and (2-methacryloyloxyethyl)phosphate, which is a phosphoric acid monoester, 33.09 g of diphenyl-2-methacryloyloxyethyl phosphate (91.33 mmol, MR-260, manufactured by Daihachi Chemical Industry Co., Ltd.), which is a phosphate triester, and 6.17 g of dibutyl hydroxytoluene (BHT, manufactured by FUJIFILM Wako Pure Chemical Corporation, special grade reagent) as a polymerization inhibitor, followed by adding 750 mL of toluene. The resultant was ultrasonically dispersed by a bath-type sonicator to obtain a cloudy solution.

The resulting cloudy solution was transferred to a 1,000 mL four-neck flask with a Dean-Stark trap installed, followed by carrying out the reaction while heating and stirring at 130°C using an oil bath to remove the generated water to the outside of the system. A time point at which generation of water was eliminated was defined as a reaction end point. A pale yellow scattering solution with a small amount of pale yellow precipitate was obtained.

The solution was concentrated to 250 mL by a vacuum evaporator. Alumina powder (8 g) was added thereto, followed by standing overnight, and thereafter suction filtration was performed with a 5B filter paper. To the obtained pale yellow scattered filtrate, 3 g of activated carbon (DarcoG60 manufactured by Norit) was added, followed by centrifuging at 23830×g for 8 hours. A centrifugal supernatant was pressure filtered through a membrane filter having a pore diameter of 0.2 µm to obtain a pale yellow transparent filtrate. A solvent was distilled off from the solution by a vacuum evaporator, followed by re-dissolving in 250 mL of acetone. To the obtained pale yellow solution, 3 g of activated carbon (Norit SX-Plus manufactured by Norit) was added, followed by centrifuging at 23830×g for 12 hours. The centrifugal supernatant was pressure filtered through a membrane filter having a pore diameter of 0.2 µm to obtain a pale yellow transparent filtrate. The obtained filtrate was concentrated to 100 mL by a vacuum evaporator. The acetone solution was charged into 800 mL of hexane in a 1,000 mL conical beaker under stirring. The resulting white precipitate was collected by suction filtration with a 5B filter paper, and the obtained solid was vacuum dried. The first bismuth compound (64.40 g) was obtained as a white powder. Synthesis was confirmed by the above measurement method.

### <Example 1>

To 70 parts by mass of the first bismuth compound obtained in Production Example 1, 10 parts by mass of methoxy ethyl methacrylate (hereinafter, referred to as "MEMA"), 10.7 parts by mass of tetrahydrofurfuryl acrylate (hereinafter, referred to as "THFAA"), and 8 parts by mass of styrene (hereinafter, referred to as "ST") were added as polymerizable compounds, and 1 part by mass of α-methylstyrene and 0.3 parts by mass of methylstyrene dimer were added as a compounding agent and uniformly dissolved to obtain a curable composition. To the curable composition, 0.45 parts by mass of dimethyl 2,2'-azobis(isobutyrate) (V-601) and 0.15 parts by mass of 1,1'-azobis(cyclohexane-1-carbonitrile) (V-40) were added and completely dissolved. The curable composition was placed in a vacuum pump under a reduced pressure to remove dissolved oxygen. Thereafter, the curable composition was injected into a glass mold having a thickness of 2 mm, followed by performing polymerization at a maximum temperature of 100°C for 5 hours to obtain a pale yellow transparent cured product. A thickness of the obtained cured product was 2.32 mm.

### <Example 2>

A pale yellow transparent cured product was obtained by performing the same operation as in Example 1 except that the amount of MEMA was changed to 18 parts by mass and addition of ST was omitted. A thickness of the obtained cured product was 2.35 mm.

### <Example 3>

A mixture was obtained in the same manner as in the preparation method of the curable composition of Example 1 except that 8 parts by mass of tetraethylene glycol dimethacrylate (hereinafter referred to as "4G") was added and addition of ST was omitted. The mixture was added with acetone and uniformly dissolved, and then acetone was distilled off under a reduced pressure by an evaporator to obtain a curable composition. A pale yellow transparent cured product was obtained in the same manner as in Example 1 except that the curable composition was used. A thickness of the obtained cured product was 2.42 mm.

### <Example 4>

A pale yellow transparent cured product was obtained by performing the same operation as in Example 3 except that nonaethylene glycol dimethacrylate (hereinafter, referred to as "9G") was used instead of 4G. A thickness of the obtained cured product was 2.40 mm.

### <Example 5>

The same operation as in Example 4 was performed except that tetrahydrofurfuryl methacrylate (hereinafter referred to as "THFMA") was used instead of THFAA. A pale yellow cured product having a thickness of 2.46 mm was obtained, but was not completely transparent.

### <Example 6>

A pale yellow transparent cured product was obtained by performing the same operation as in Example 4 except that the amount of THFAA was changed to 8.7 parts by mass and the amount of 9G was changed to 10 parts by mass. A thickness of the obtained cured product was 2.20 mm.

### <Example 7>

A pale yellow transparent cured product was obtained by performing the same operation as in Example 4 except that the amount of MEMA was changed to 8 parts by mass and the amount of 9G was changed to 10 parts by mass. A thickness of the obtained cured product was 2.23 mm.

### <Example 8>

A pale yellow transparent cured product was obtained by performing the same operation as in Example 4 except that the amount of MEMA was changed to 7 parts by mass, the amount of THFAA was changed to 6.7 parts by mass, and the amount of 9G was changed to 15 parts by mass. A thickness of the obtained cured product was 2.48 mm.

### <Example 9>

A pale yellow transparent cured product was obtained by performing the same operation as in Example 4 except that the amount of the first bismuth compound was changed to 65 parts by mass, the amount of MEMA was changed to 13 parts by mass, the amount of THFAA was changed to 6.7 parts by mass, and the amount of 9G was changed to 14 parts by mass. A thickness of the obtained cured product was 2.30 mm.

### <Example 10>

A pale yellow transparent cured product was obtained by performing the same operation as in Example 4 except that THFMA was used instead of THFAA, the amount of 9G was changed to 5 parts by mass, and 3 parts by mass of methacrylonitrile (hereinafter referred to as "MN") was added. A thickness of the obtained cured product was 2.44 mm.

### <Comparative Example 1>

A pale yellow transparent cured product was obtained by performing the same operation as in Example 4 except that MN was used instead of MEMA and methyl acrylate (hereinafter referred to as "MA") was used instead of THFAA. A thickness of the obtained cured product was 2.33 mm.

### <Comparative Example 2>

A pale yellow transparent cured product was obtained by performing the same operation as in Comparative Example 1 except that ST was used instead of MA. A thickness of the obtained cured product was 2.32 mm.

### <Comparative Example 3>

A pale yellow transparent cured product was obtained by performing the same operation as in Comparative Example 2 except that the amount of MN was changed to 15.7 parts by mass, the amount of ST was changed to 13 parts by mass, and addition of 9G was omitted. A thickness of the obtained cured product was 2.18 mm.

### <Comparative Example 4>

A pale yellow transparent cured product was obtained by performing the same operation as in Comparative Example 3 except that 9G was used instead of ST. A thickness of the obtained cured product was 2.38 mm.

### <Evaluation Test>

### [Measurement on Viscosity of Curable Composition]

In the examples and comparative examples, a viscosity of a uniform curable composition obtained by mixing the first bismuth compound and the polymerizable compound was measured by measuring a dynamic viscosity at 25°C with a Cannon-Fenske viscometer and multiplying the dynamic viscosity by a density. Alternatively, measurement was performed at 25°C using an E-type viscometer (Rheometer RST manufactured by Brookfield). As a result, the viscosity was within a range of 50 mPa·s to 100,000 mPa·s.

### [Measurement on Lead Equivalent]

The X-ray shielding ability of the obtained cured product was evaluated by measuring the amount of transmission X-rays and determining the lead equivalent in accordance with Japanese Industrial Standard JIS T 61331-1 "Protection tool for diagnostic X-rays-Part 1: Method for determining attenuation characteristics of material". As an X-ray apparatus, MG-45 manufactured by Yxlon International Co., Ltd. was used, an X-ray tube voltage was set to 120 kV, a tube current was set to 12.5 mA, and 2.5 mm Al was used as an additional filter plate. A distance from a focal point of the X-ray tube to a sample was set to 600 mm, a distance from the sample to a measuring device was set to 900 mm, and as the measuring device, an ionization chamber dosimeter (RAMTEC-Solo type A4 probe manufactured by Toyo Medic Co., Ltd.) was used. The X-ray shielding ability was evaluated as a lead equivalent (mmPb) which is a thickness (mm) of an equivalent lead plate. As a result, the lead equivalent was 0.10 ± 0.04 mmPb.

### [Measurement on Odor Degree]

In order to evaluate the odor of the obtained cured product, the odor degree was measured by using a portable odor sensor XP-329m manufactured by New Cosmos Electric Co., Ltd.. First, a desiccator with an upper horizontal faucet installed (017440-150 manufactured by Sibata Scientific Co., Ltd.) and an odor sensor were connected by a nylon tube, and a background of the odor sensor was set to zero. The cured product was allowed to stand still in the desiccator, and a value of the odor sensor after suction for 5 minutes was defined as the odor degree of the cured product. The results are shown in Table 1.

### [Measurement on Impact Resistance]

In order to evaluate the impact resistance of the obtained cured product, a falling ball test was performed. First, a support ring made of NBR was joined to a tube having an inner diameter of 25 mm, an outer diameter of 32 mm, and a height of 25 mm. The support ring had a thickness of 3 mm and an inner diameter of 25 mm. The cured product was allowed to stand still on the support ring. Steel balls were dropped from a height of 1.27 m onto the cured product using a dropping device having an electromagnetic stone. Weights of the steel balls were 4.5 g, 6.9 g, 14 g, 16 g, 32 g, 50 g, 67 g, 80 g, 95 g, 112 g, 130 g, 151 g, 174 g, 198 g, 225 g, and 261 g. The steel balls were dropped in order from a lightest steel ball, and the weight of the steel ball immediately before cracks or fractures occurred in the cured product was defined as the maximum impact resistance value. The results are shown in Table 1.

**[Table 1]**

| | Curable composition | | | | | | | | | | Lens | |
|---|---|---|---|---|---|---|---|---|---|---|---|---|
| | First bismuth compound (Part by mass) | Monofunctional polymerizable compound | | | Bifunctional polymerizable compound | | | Nitrile compound | | | Odor degree | Impact resistance (g) |
| | | Type | Part by mass | Boiling point (°C) | Type | Part by mass | Boiling point (°C) | Name | Part by mass | Boiling point (°C) | | |
| Example 1 | 70 | MEMA | 10 | 185 | - | | | - | | | 108 | 4.5 |
| | | THFAA | 10.7 | 220 | - | | | - | | | | |
| | | ST | 8 | 145 | - | | | - | | | | |
| Example 2 | 70 | MEMA | 18 | 185 | - | | | - | | | 88 | <4.5 |
| | | THFAA | 10.7 | 220 | - | | | - | | | | |
| Example 3 | 70 | MEMA | 10 | 185 | 4G | 8 | >90 | - | | | 110 | 4.5 |
| | | THFAA | 10.7 | 220 | | | | - | | | | |
| Example 4 | 70 | MEMA | 10 | 185 | 9G | 8 | >90 | - | | | 90 | 14 |
| | | THFAA | 10.7 | 220 | | | | - | | | | |
| Example 5 | 70 | MEMA | 10 | 185 | 9G | 8 | >90 | - | | | 108 | 6.9 |
| | | THFMA | 10.7 | 230 | | | | - | | | | |
| Example 6 | 70 | MEMA | 10 | 185 | 9G | 10 | >90 | - | | | 105 | 32 |
| | | THFAA | 8.7 | 220 | | | | - | | | | |
| Example 7 | 70 | MEMA | 8 | 185 | 9G | 10 | >90 | - | | | 97 | 14 |
| | | THFAA | 10.7 | 220 | | | | - | | | | |
| Example 8 | 70 | MEMA | 7 | 185 | 9G | 15 | >90 | - | | | 98 | 50 |
| | | THFAA | 6.7 | 220 | | | | - | | | | |
| Example 9 | 65 | MEMA | 13 | 185 | 9G | 14 | >90 | - | | | 103 | 32 |
| | | THFAA | 6.7 | 220 | | | | - | | | | |
| Example 10 | 70 | MEMA | 10 | 185 | 9G | 5 | >90 | MN | 3 | 90 | 145 | 6.9 |
| | | THFMA | 10.7 | 230 | | | | | | | | |
| Comparative Example 1 | 70 | MA | 10.7 | 80 | 9G | 8 | >90 | MN | 10 | 90 | 372 | 6.9 |
| Comparative Example 2 | 70 | ST | 10.7 | 145 | 9G | 8 | >90 | MN | 10 | 90 | 214 | 4.5 |
| Comparative Example 3 | 70 | ST | 13 | 145 | - | | | MN | 15.7 | 90 | 314 | <4.5 |
| Comparative Example 4 | 70 | - | | | 9G | 13 | >90 | MN | 15.7 | 90 | 353 | 6.9 |

From the above results, it was found that odor of the cured product was reduced by using a polymerizable compound having a boiling point at 1 atm of 90°C or higher and hardly using a nitrile compound having a nitrile group.

Further, it was found that the impact resistance was higher when three types of polymerizable compounds were used than when two types of polymerizable compounds having a high boiling point were used. Combination of MEMA, THFAA, and 9G provided the highest impact resistance.

A composition ratio of these three types of polymerizable compounds was adjusted, so that it was possible to obtain a cured product having high impact resistance and low odor, with an odor degree of about 100 and a maximum impact resistance value of 30 g or more. The cured product may be suitably used as protective eyeglasses.

## Claims

1. A curable composition comprising:
a first bismuth compound comprising bismuth and at least one of an acryloyl group or a methacryloyl group; and
a first polymerizable compound having at least one polymerizable group selected from the group consisting of an acryloyl group, a methacryloyl group, a vinyl group, and an allyl group, and having a boiling point at 1 atm of 90°C or higher,
wherein a content of a nitrile compound having a nitrile group in the curable composition is less than 10 mass%.

2. The curable composition according to claim 1, wherein a content of the first bismuth compound is 20 mass% or more and 90 mass% or less.

3. The curable composition according to claim 1 or 2,
wherein a content of the first polymerizable compound is 10 mass% or more and 80 mass% or less.

4. The curable composition according to claim 1 or 2,
wherein the first polymerizable compound comprises a monofunctional polymerizable compound having the polymerizable group in a number of one.

5. The curable composition according to claim 4, wherein the monofunctional polymerizable compound has a boiling point of 100°C or higher and 300°C or lower.

6. The curable composition according to claim 4, wherein the monofunctional polymerizable compound comprises a monofunctional (meth)acrylate represented by the following Formula (I): 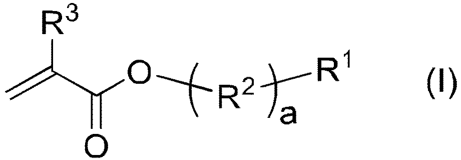 wherein,
R¹ is a hydroxy group, a linear or branched alkyl group having 1 or more and 10 or less carbon atoms, a linear or branched alkoxy group having 1 or more and 10 or less carbon atoms, a cycloalkyl group having 4 or more and 10 or less carbon atoms, a heterocycloalkyl group having 3 or more and 10 or less carbon atoms and 1 or more and 3 or less hetero atoms, an aryl group having 4 or more and 10 or less carbon atoms, or a heteroaryl group having 3 or more and 10 or less carbon atoms and 1 or more and 3 or less hetero atoms,
R² is a linear or branched alkylene group having 1 or more and 10 or less carbon atoms or an alkylene oxide group having 1 or more and 10 or less carbon atoms,
R³ is a hydrogen atom or a methyl group, and
a is 0 or 1.

7. The curable composition according to claim 4, wherein the monofunctional polymerizable compound comprises at least one (meth)acrylate selected from the group consisting of methoxyethyl acrylate, ethoxyethyl acrylate, methoxyethyl methacrylate, ethoxyethyl methacrylate, tetrahydrofurfuryl acrylate, and tetrahydrofurfuryl methacrylate.

8. The curable composition according to claim 1 or 2,
wherein the first polymerizable compound comprises a polyfunctional polymerizable compound having the polymerizable group in a number of two or more.

9. The curable composition according to claim 8, wherein the polyfunctional polymerizable compound has a number average molecular weight of 90 or more and 2,000 or less, as determined by gel permeation chromatography analysis.

10. The curable composition according to claim 8, wherein the polyfunctional polymerizable compound comprises a bifunctional (meth)acrylate represented by the following Formula (II): 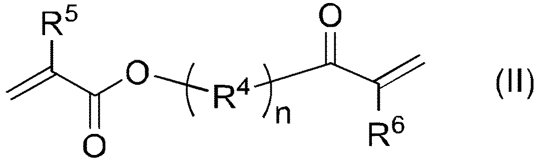 wherein,
R⁴ is a linear or branched alkylene group having 1 or more and 10 or less carbon atoms or a linear or branched alkylene oxide group having 1 or more and 10 or less carbon atoms,
R⁵ and R⁶ each independently represent a hydrogen atom or a methyl group, and
n is a number of 1 or more and 50 or less.

11. The curable composition according to claim 8, wherein the polyfunctional polymerizable compound comprises a bifunctional (meth)acrylate selected from the group consisting of polyethylene glycol dimethacrylate, polyethylene glycol diacrylate, polypropylene glycol dimethacrylate, polypropylene glycol diacrylate, polytetramethylene glycol dimethacrylate, and polytetramethylene glycol diacrylate.

12. A cured product of the curable composition according to claim 1 or 2.

13. An optical article comprising the cured product according to claim 12.

14. A lens comprising the cured product according to claim 12.

15. Eyeglasses comprising the lens according to claim 14.
